# EUROPÄISCHE PATENTSCHRIFT

(11) **EP 2 627 281 B1**
(45) Veröffentlichungstag und Bekanntmachung des Hinweises auf die Patenterteilung: **03.09.2014**
(21) Anmeldenummer: 11791445.7
(22) Anmeldetag: 01.12.2011
(51) Int. Cl.: A61C 13/20, F27B 17/02

(54) **PRESSOFEN FÜR ZAHNERSATZ ODER ZAHNTEILERSATZ**
PRESS FURNACE FOR A DENTURE OR PARTIAL DENTURE
FOUR DE PRESSÉE POUR PROTHÈSE DENTAIRE OU PROTHÈSE DENTAIRE PARTIELLE

(30) Priorität: 09.12.2010 DE 102010053873
(43) Veröffentlichungstag der Anmeldung: 21.08.2013
(73) Patentinhaber: Dekema Dental-Keramiköfen GmbH, 83395 Freilassing (DE)
(72) Erfinder: MILLER, Stephan, 83278 Traunstein (DE)
(74) Vertreter: Manitz, Finsterwald & Partner GbR
(86) Internationale Anmeldenummer: PCT/EP2011/006049
(87) Internationale Veröffentlichungsnummer: WO 2012/076134

(56) Entgegenhaltungen:
- EP-A1- 0 438 802
- DE-A1- 3 500 267
- JP-A- 8 281 405
- US-A1- 2010 028 477
- US-B1- 6 303 059

## Beschreibung

Die vorliegende Erfindung betrifft einen Pressofen für Zahnersatz oder Zahnteilersatz mit einer Brennkammer, in welcher eine Pressform, insbesondere Muffel, mit einem Presskanal zum Einführen eines Pressstempels positionierbar ist, und einem Antrieb zum Antreiben des Pressstempels.

Bei derartigen Pressöfen wird das Ausgangsmaterial für den Zahnersatz oder Zahnteilersatz zumeist in Form von Pellets in einer so genannten Muffel erwärmt und in Form gepresst. Die Muffel weist hierfür einen zuvor mit Hilfe einer Abdruckform hergestellten Hohlraum auf, welcher der Form des herzustellenden Zahnersatzes oder Zahnteilersatzes entspricht. Über einen Stempel wird die Zahnersatzmasse in den Hohlraum gepresst und dort zumindest so lange unter Druck gehalten, bis der Hohlraum vollständig gefüllt ist.

Ein Pressofen gemäß dem Oberbegriff von Anspruch 1 ist aus der EP 0 438 802 A1 bekannt. Ein weiterer Pressofen ist aus US 6303059 B1, ein weiteres Presssystem aus US 2010/028477 A1 bekannt.

Der Erfindung liegt die Aufgabe zugrunde, einen Pressofen der eingangs genannten Art mit verbessertem Antrieb anzugeben.

Diese Aufgabe wird dadurch gelöst, dass als Antrieb ein Elektromagnet vorgesehen ist, dessen Magnetanker oder Magnetspule den Pressstempel antreibt.

Die Verwendung eines Elektromagneten als Antrieb hat den Vorteil, dass der Pressofen sehr einfach aufgebaut werden kann. Der Platzbedarf ist verhältnismäßig gering und es ist kein Druckanschluss nötig wie bei Pressöfen mit Druck- oder Vakuumantrieb. Mittels eines Elektromagneten kann auch eine große Kraft auf den Pressstempel ausgeübt werden.

Besonders bevorzugt ist die Verwendung eines Wechselstrommagneten. Dieser ist durch eine große Linearität der Kraft-Weg-Kennlinie des bewegten Ankers in Bezug auf die Magnetspule gekennzeichnet. Eine besonders hohe Linearität ist bei einem Tauchspulenmagneten gegeben, bei welchem sich die Magnetspule relativ zum Dauermagneten bewegt.

Nach einer bevorzugten Ausgestaltung der Erfindung sind Mittel zum Messen der Leistungsaufnahme des Elektromagneten sowie Mittel zur Bestimmung der auf den Pressstempel ausgeübten Kraft anhand der Leistungsaufnahme vorgesehen. Dies ermöglicht eine einfache und gute Messung der vom Pressstempel auf das Pressgut ausgeübten Kraft, ohne dass hier zusätzliche Einrichtungen notwendig wären. Die gemessene Kraft kann zur Steuerung bzw. Regelung des Pressofens verwendet werden, beispielsweise um eine vorgegebene Kraft einzuregeln oder anhand eines Kraftanstiegs die Beendigung des Pressvorgangs zu erkennen. Die gemessene Leistungsaufnahme oder die daraus bestimmte Kraft können auch dazu verwendet werden, eine voreingegebene Presszeit zu verkürzen. Dies kann auch in mehreren Schritten erfolgen.

Nach noch einer bevorzugten Ausgestaltung der Erfindung sind Mittel zur Messung des Spannungsabfalls am Elektromagneten oder der Stromaufnahme des Elektromagneten sowie Mittel zur Bestimmung der Position des Stempels aufgrund der gemessenen Spannung oder der gemessenen Stromaufnahme vorgesehen. Dadurch kann der vom Pressstempel zurückgelegte Weg auf einfache Weise mit hoher Genauigkeit und ohne zusätzliche Einrichtungen gemessen werden. Der gemessene Weg kann dann wiederum zur Steuerung bzw. Regelung des Pressofens verwendet werden, beispielsweise um die Eindringgeschwindigkeit des Pressstempels zu regeln oder eine Beendigung des Pressvorgangs zu erkennen.

Auch der gemessene Spannungsabfall oder die Stromaufnahme des Elektromagneten bzw. die daraus bestimmte Position des Stempels können zur Verkürzung einer voreingegebenen Presszeit verwendet werden, ebenfalls auch wieder in mehreren Schritten.

Des weiteren kann die Brennkammer des Pressofens evakuierbar oder teilevakuierbar und/oder mit Schutzgas befüllbar sein. Dadurch ist es möglich, Zahnersatz oder Zahnteilersatz unter einer gewünschten Atmosphäre zu pressen.

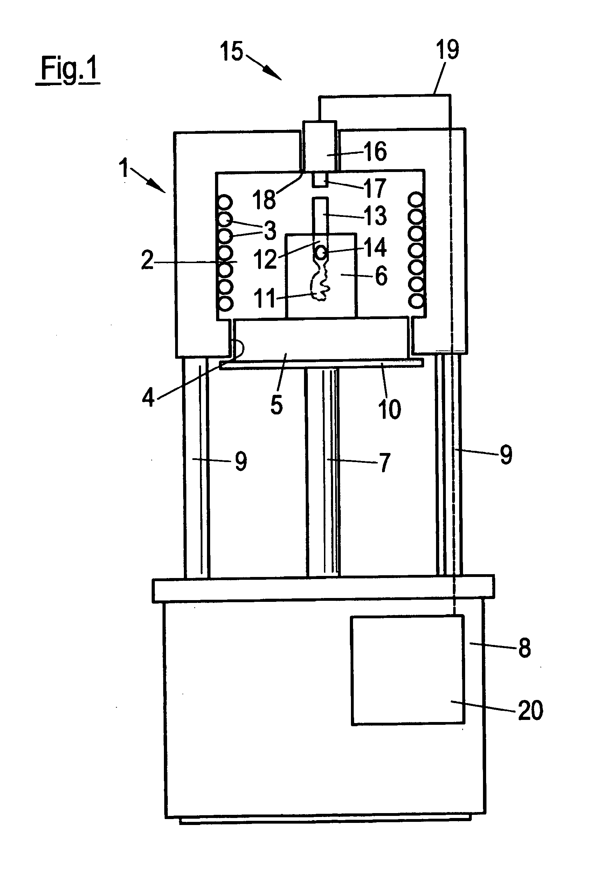

Ein Ausführungsbeispiel der Erfindung ist in der Zeichnung dargestellt und wird nachfolgend beschrieben. Es zeigt als einzige Figur
- Fig. 1: eine teilweise geschnittene Seitenansicht eines erfindungsgemäßen Pressofens.

Der dargestellte Pressofen umfasst ein Brennofengehäuse 1 mit einer darin vorhandenen Brennkammer 2 und einer in der Brennkammer 2 vorhandenen Heizspirale 3. An ihrer Unterseite weist die Brennkammer 2 eine Öffnung 4 auf, durch welche ein Träger 5 für eine Muffel 6 in die Brennkammer 2 ein- und aus dieser ausfahrbar ist. Zum Ein- und Ausfahren des Trägers 5 ist ein Lift 7 vorgesehen, der an der Unterseite des Trägers 5 angreift.

Der Lift 7 ist durch einen hier nicht dargestellten, in einem unterhalb des Brennofengehäuses 1 angeordneten Sockelgehäuse 8 vorhandenen Antrieb betätigbar. Über Säulen 9 trägt das Sockelgehäuse 8 das Brennofengehäuse 1. An der Unterseite des Trägers 5 ist eine Platte 10 angeordnet, über welche die Brennkammer 2 bei eingefahrenem Träger 5 gasdicht verschließbar ist.

Die Muffel 6 weist einen Hohlraum 11 auf, dessen Form einem gewünschten Zahnersatz oder Zahnteilersatz entspricht und zuvor mit Hilfe eines Modells in bekannter Weise hergestellt wurde. Der Hohlraum 11 ist an einen Kanal 12 angeschlossen, der auf der Oberseite der Muffel 6 mündet. Der Kanal 12 dient als Führung für einen Pressstempel 13 und zur Aufnahme eines Pellets 14 aus Zahnersatzmaterial. Oberhalb der Muffel 6 und der Brennkammeröffnung 4 gegenüberliegend ist ein Antrieb 15 für den Pressstempel 13 vorgesehen. Dieser besteht aus einem Elektromagneten 16 mit einer hier nicht dargestellten Magnetspule und einem Magnetanker 17. Der Elektromagnet ist in eine Ausnehmung 18 in der Oberseite des Brennofengehäuses 1 eingesetzt. Der Magnetanker 17 ist mit dem Pressstempel 13 axial ausgerichtet und zum Antreiben des Pressstempels 13 ausgebildet.

Hierfür wird der Elektromagnet 16 bestromt, was über eine Zufuhrleitung 19 erfolgt, die andererseits mit einer Energieversorgungs- und Steuereinheit 20 im Sockelgehäuse 8 des Pressofens verbunden ist. Beim Bestromen des Elektromagneten 16 fährt der Magnetanker 17 aus dem Elektromagneten 16 aus und treibt den Pressstempel 13 in den Presskanal 12 der Muffel 16.

Zur Herstellung eines Zahnersatzes oder Zahnteilersatzes mit dem dargestellten Pressofen wird eine zuvor hergestellte Muffel 6 mit Formraum 11, Presskanal 12 und einem darin angeordneten Pellet 14 aus Zahnersatzmaterial auf dem aus der Brennkammer 2 ausgefahrenen Träger 5 des Pressofens positioniert. In den Presskanal 12 der Muffel 6 wird ein Pressstempel 13 eingesetzt. Danach wird der Träger 5 mit der Muffel 6 über den Lift 7 in die Brennkammer 2 eingefahren, wobei diese durch den Teller 10 gasdicht abgedichtet wird.

Zur Ausübung eines bestimmten Pressdrucks auf den Pressstempel 13 wird nun, nachdem die Brennkammer 2 gewünschtenfalls evakuiert, teilevakuiert und/oder mit Schutzgas geflutet und das Pellet 14 ausreichend aufgeheizt wurde, der Elektromagnet 16 derart über die Leitung 19 bestromt, dass der Magnetanker 17 auf den Pressstempel 13 einen gewünschten Druck bzw. eine gewünschte Presskraft ausübt. Diese Presskraft wird vom Pressstempel 13 auf das Zahnersatzmaterial 14 übertragen. Über die Steuereinheit 20 kann dabei ein gewünschter Presskraftverlauf über die Zeit realisiert werden. Dies kann beispielsweise dadurch geschehen, dass die Leistungsaufnahme des Elektromagneten 16 gemessen und aus der Leistungsaufnahme die ausgeübte Presskraft berechnet wird. Eine andere Möglichkeit besteht darin, aus dem Spannungsabfall am Elektromagneten 16 oder aus dessen Stromaufnahme die Position des Magnetankers 17 und damit des Pressstempels 13 zu bestimmen. Über die Position des Pressstempels 13 kann der Eindringweg berechnet werden.

Nach beendetem Pressen wird die Brennkammer 2 gegebenenfalls belüftet. Danach kann die Brennkammer durch Herabfahren des Trägers 5 geöffnet und die Muffel 6 mit dem hergestellten Zahnersatz oder Zahnteilersatz entnommen werden.

### Bezugszeichenliste

- 1: Brennkammergehäuse
- 2: Brennkammer
- 3: Heizeinrichtung
- 4: untere Öffnung von 1
- 5: Träger
- 6: Muffel
- 7: Lift
- 8: Sockelgehäuse
- 9: Säule
- 10: Teller
- 11: Formraum
- 12: Presskanal
- 13: Pressstempel
- 14: Pellet
- 15: Antrieb
- 16: Elektromagnet
- 17: Magnetanker
- 18: Ausnehmung
- 19: Versorgungsleitung
- 20: Versorgungs- und Steuereinheit

## Patentansprüche

1. Pressofen für Zahnersatz oder Zahnteilersatz mit einer Brennkammer (2), in welcher eine Pressform, insbesondere Muffel (6), mit einem Presskanal (12) zum Einführen eines Pressstempels (13) positionierbar ist, und einem Antrieb (15) zum Antreiben des Pressstempels (13),
**dadurch gekennzeichnet, dass**
als Antrieb (15) ein Elektromagnet (16) vorgesehen ist, dessen Magnetanker (17) oder Magnetspule den Pressstempel (13) antreibt.

2. Pressofen nach Anspruch 1,
**dadurch gekennzeichnet, dass**
der Elektromagnet (16) als Wechselstrommagnet ausgebildet ist.

3. Pressofen nach Anspruch 1 oder 2,
**dadurch gekennzeichnet, dass**
Mittel zur Messung der Leistungsaufnahme des Elektromagneten (16) sowie Mittel zur Bestimmung der auf den Pressstempel (13) ausgeübten Kraft anhand der gemessenen Leistungsaufnahme vorgesehen sind.

4. Pressofen nach einem der vorhergehenden Ansprüche,
**dadurch gekennzeichnet, dass**
Mittel zur Messung des Spannungsabfalls am Elektromagneten (16) oder der Stromaufnahme des Elektromagneten (16) sowie Mittel zur Bestimmung der Position des Magnetankers (17) oder der Magnetspule und daraus der Position des Pressstempels (13) aufgrund der gemessenen Spannung oder der gemessenen Leistungsaufnahme vorgesehen sind.

5. Pressofen nach einem der vorhergehenden Ansprüche,
**dadurch gekennzeichnet, dass**
die Brennkammer (2) zumindest teilweise evakuierbar ist.

6. Pressofen nach einem der vorhergehenden Ansprüche,
**dadurch gekennzeichnet, dass**
die Brennkammer (2) mit Schutzgas befüllbar ist.

7. Pressofen nach einem der vorhergehenden Ansprüche,
**dadurch gekennzeichnet, dass**
Mittel vorgesehen sind, durch welche eine voreingegebene Presszeit in Abhängigkeit von gemessenem Ofenparametern, insbesondere der Leistungs- oder Stromaufnahme des Elektromagneten (16) oder des Spannungsabfalls am Elektromagneten (16) in einem oder mehreren Schritten verkürzbar ist.

## Claims

1. A press furnace for a denture or a partial denture having a firing chamber (2) in which a press mold, in particular a muffle (6), with a press passage (12) for introducing a press plunger (13) can be positioned and having a drive (15) for driving the press plunger (13),
**characterized in that**
an electromagnet (16) whose armature (17) or coil drives the press plunger (13) is provided as the drive (15) .

2. A press furnace in accordance with claim 1,
**characterized in that**
the electromagnet (16) is configured as an alternating-current magnet.

3. A press furnace in accordance with claim 1 or claim 2,
**characterized in that**
means for measuring the power consumption of the electromagnet (16) as well as means for determining the force exerted on the press plunger (13) with reference to the measured power consumption are provided.

4. A press furnace in accordance with any one of the preceding claims,
**characterized in that**
means are provided for measuring the voltage drop at the electromagnet (16) or the current consumption of the electromagnet (16) as well as means for determining the position of the armature (17) or of the coil, and from this the position of the press plunger (13) on the basis of the measured voltage or of the measured power consumption.

5. A press furnace in accordance with any one of the preceding claims,
**characterized in that**
the firing chamber (2) can be at least partly evacuated.

6. A press furnace in accordance with any one of the preceding claims,
**characterized in that**
the firing chamber (2) can be filled with inert gas.

7. A press furnace in accordance with any one of the preceding claims,
**characterized in that**
means are provided by which a preset press time can be shortened in one or more steps in dependence on measured furnace parameters, in particular the power consumption or current consumption of the electromagnet (16) or the voltage drop at the electromagnet (16).

## Revendications

1. Four-presse pour prothèse dentaire ou prothèse dentaire partielle comprenant une chambre de chauffe (2) dans laquelle un moule de pressage, en particulier un moufle (6), avec un canal de pressage (12) pour l'introduction d'un poinçon de presse (13), est susceptible d'être positionné, et comprenant un entraînement (15) pour l'entraînement du poinçon de presse (13),
**caractérisé en ce qu'**il est prévu à titre d'entraînement (15) un électroaimant (16), dont l'induit magnétique (17) ou la bobine magnétique entraîne le poinçon de presse (13).

2. Four-presse selon la revendication 1,
**caractérisé en ce que** l'électroaimant (16) est réalisé sous forme d'électroaimant à courant alternatif.

3. Four-presse selon la revendication 1 ou 2,
**caractérisé en ce qu'**il est prévu des moyens pour mesurer l'absorption de puissance de l'électroaimant (16) ainsi que des moyens pour déterminer la force exercée sur le poinçon de presse (13) avec l'aide de la puissance absorbée mesurée.

4. Four-presse selon l'une des revendications précédentes,
**caractérisé en ce qu'**il est prévu des moyens pour mesurer la chute de tension au niveau de l'électroaimant (16) ou l'absorption de puissance de l'électroaimant (16), ainsi que des moyens pour déterminer la position de l'induit magnétique (17) ou de la bobine magnétique, et à partir de celle-ci la position du poinçon de presse (13) avec l'aide de la tension mesurée ou de l'absorption de puissance mesurée.

5. Four-presse selon l'une des revendications précédentes,
**caractérisé en ce que** la chambre de chauffe (2) est susceptible d'être au moins partiellement évacuée.

6. Four-presse selon l'une des revendications précédentes,
**caractérisé en ce que** la chambre de chauffe (2) est susceptible d'être remplie avec un gaz protecteur.

7. Four-presse selon l'une des revendications précédentes,
**caractérisé en ce qu'**il est prévu des moyens grâce auxquels un temps de pressage prescrit est susceptible d'être raccourci en une ou plusieurs étapes en fonction de paramètres mesurés du four, en particulier de la puissance ou du courant absorbé par l'électroaimant (16) ou de la chute de tension au niveau de l'électroaimant (16).
